# EUROPÄISCHE PATENTSCHRIFT

(11) **EP 4 314 706 B1**
(45) Veröffentlichungstag und Bekanntmachung des Hinweises auf die Patenterteilung: **25.06.2025**
(21) Anmeldenummer: 22711464.2
(22) Anmeldetag: 08.03.2022
(51) Int. Cl.: G01C 9/24

(54) **ZUSATZGERÄT FÜR EINE WASSERWAAGE**
ADD-ON FOR A SPIRIT LEVEL
ACCESSOIRE POUR NIVEAU À BULLE

(30) Priorität: 24.03.2021 DE 102021107367
(43) Veröffentlichungstag der Anmeldung: 07.02.2024
(73) Patentinhaber: Kolitsch, Stefan, 04720 Döbeln (DE)
(72) Erfinder: Kolitsch, Stefan, 04720 Döbeln (DE)
(74) Vertreter: Rothe, Silke
(86) Internationale Anmeldenummer: PCT/DE2022/100184
(87) Internationale Veröffentlichungsnummer: WO 2022/199748

(56) Entgegenhaltungen:
- FR-A1- 2 602 044

## Beschreibung

Die vorliegende Erfindung betrifft ein Zusatzgerät für eine Wasserwaage, ausgestaltet als Markierungshilfe zum Anzeigen und als Markierungsinstrument zum Markieren der Position von Bohrlöchern zur Montage von Objekten an einer Wand, wobei das Zusatzgerät auf einer Wasserwaage lösbar befestigt und entlang der Längsachse dieser Wasserwaage verschiebbar angeordnet ist.

Wasserwaagen weisen unabhängig von ihrer konkreten Ausführung einen quaderförmigen Grundkörper mit zwei Schmalseiten, zwei Breitseiten und zwei Stirnseiten auf. Mindestens eine Schmalseite ist als eine planare Anlagefläche ausgestaltet. Mindestens eine Breitseite und eine Stirnseite sind mit einem Horizontal- bzw. einem Vertikalmessmodul ausgestattet, für die üblicherweise sog. Libellen verwendet werden. Somit ist in vorteilhafter Weise sowohl eine horizontale als auch vertikale Ausrichtung verschiedenartiger Objekte möglich.

Gattungsgemäße Wasserwaagen sind in einer kaum überschaubaren Vielfalt bekannt und weisen oftmals zusätzliche Hilfsmittel für spezifische Objekte oder Messaufgaben auf. So beschreibt EP 2 744 055 A1 eine Wasserwaage mit Markierungsschablone zur Ausrichtung von Steckdosen und ähnlichen Baugruppen. Gegenstand von DE 20 2010 000 689 U1 ist eine Wasserwaage mit Schablone zum Anbringen von Urinalen.

Bei einer Wasserwaage gemäß DE 102 19 936 A1 ist der Grundkörper mit Durchbrüchen versehen, mit denen Markierungen an einer Wand erstellt werden können. Das Aufbringen von Markierungen für Bohrlöcher und dergleichen zur Montage von Gegenständen an einer Wand stellt eine wesentliche Anwendung von Wasserwaagen dar. Hierfür sind weitere Lösungsvorschläge z.B. aus DE 197 49 026 A1, DE 198 10 716 A1, DE 10 2010 044 225 A1 und DE 20 2007 007 119 U1 bekannt.

Trotz der Vielzahl bekannter Konstruktionen besteht weiterhin ein Entwicklungsbedarf. Dies betrifft insbesondere Einsatzfälle, bei denen vom Nutzer mindestens zwei Markierungen mit Abstand zueinander in einer Ebene auf einer Wand aufgebracht werden müssen. Solche Arbeiten sind beispielsweise für eine Montage von Hängeschränken und Regalen oder für das Aufhängen großer Wandbilder notwendig. Dabei müssen für eine exakte spätere Montageposition zunächst sowohl Aufgaben einer Markierungshilfe (Anzeigen der Position ähnlich einer Schablone) als auch Aufgaben eines Markierungsinstrumentes (Anzeichnen bzw. Markieren der Position) erfüllt werden.

DE 195 01 383 A1 beschreibt ein Anreißsystem für eine Wasserwaage mit zwei Stifthaltern. Dabei weist jeder Stifthalter eine Federeinheit auf, die einen stiftförmigen Gegenstand gegen einen am Stifthalter ausgebildeten Anschlag drückt, um ihn zu sichern. Beide Stifthalter sind unabhängig voneinander verschiebbar und mit einem Wasserwaagenelement ausgestattet.

Aus US 7 513 056 B1 ist eine Wasserwaage mit einem langgestreckten Kanal bekannt, an dem eine Schiene angebracht ist. Auf dieser Schiene sind mehrere Hülsen verschiebbar gelagert, in denen jeweils ein Markierungsinstrument angeordnet ist.

Gegenstand von DE 200 04 419 U1 ist eine Wasserwaage mit einem Schlitten, der eine Halterung zur Aufnahme eines Schreibwerkzeuges aufweist. Der Schlitten ist mit einem Fördermittel verbunden, das elektromotorisch antreibbar ist.

Schließlich wird in DE 101 54 574 A1 ein Markier-Werkzeug für verschiedene Markierungsaufgaben beschrieben. Das Werkzeug weist in der Grundvariante keinen quaderförmigen Grundkörper auf, sondern zwei separate Schenkel, die an einem Drehpunkt miteinander verbunden sind und in verschiedenen Winkeln zueinander positioniert werden können. Die Grundvariante ist in einer Ausführung derart modifiziert, dass auf einem Schenkel ein Wasserwaagen-Modul befestigt ist. Weiterhin werden auf dem Schenkel als Zusatzgerät zwei Markierungsspitzen geführt, die jeweils durch eine Feder festgeklemmt und durch Zusammendrücken der Feder gelockert sowie auf dem Schenkel verschoben werden können. Der Nutzer kann die zwei Markierungsspitzen und somit das gesamte Werkzeug mit den Händen halten und mit Blick auf den Wasserwaagen-Modul ausrichten. Dann markiert er mit seinen auf den Markierungsspitzen aufliegenden Händen durch Niederdrücken dieser Markierungsspitzen die jeweilige Position auf der zugeordneten Wand. Dabei wird als eine Ausgestaltung vorgeschlagen, dass die Markierungsspitzen vor dem Anlegen an die Wand in ein Stempelkissen gedrückt werden. Somit werden gut erkennbare Farbabdrücke auf der Wand erzeugt, welche die Position der späteren Bohrlöcher markieren.

Diese technische Lösung weist jedoch wesentliche Nachteile auf: Die Markierungsspitzen ragen ständig aus der Kontur des Wasserwaagen-Moduls hervor, das somit bei der Ausrichtung lediglich mit diesen Elementen auf der Wand aufliegt und nicht mit dem gesamten Grundkörper. Dadurch können Beschädigungen an der Wand verursacht werden, sofern das Werkzeug beim Ausrichten mit den Markierungsspitzen über diese Wand geschoben wird. Außerdem gewährleistet die somit erzielte Auflage in lediglich zwei Punkten keine lagestabile Abstützung an der Wand. Ein weiterer Nachteil ist die Notwendigkeit eines zusätzlichen Stempelkissens, um die Markierung herzustellen.

FR 2 602 044 A1 offenbart ein Zusatzgerät für eine Wasserwaage, welches auf einer Wasserwaage lösbar befestigt und entlang der Längsachse der Wasserwaage verschiebbar angeordnet ist, wobei das Zusatzgerät einen Stiftkopf und ein Befestigungsteil zur Verbindung mit der Wasserwaage aufweist, wobei der Stiftkopf einen quaderförmigen Grundkörper aufweist, in dessen Längsrichtung eine durchgehende Ausnehmung zur Aufnahme eines Markierungselementes angeordnet ist, wobei an der Ausnehmung eine Feder derart angeordnet ist, dass das Markierungselement mit einer Federkraft entgegen der zu markierenden Wand beaufschlagt wird und an der zur Wand entgegengesetzten Stirnseite mit einem Teilabschnitt aus dem Stiftkopf herausragt; wobei eine Seitenfläche des Markierungselementes einen Längsspalt aufweist, in dem eine am Grundkörper ausgestaltete oder befestigte Stegkontur derart geführt ist, dass der Weg des Markierungselementes begrenzt ist.

Aufgabe der Erfindung ist es, ein Zusatzgerät für eine Wasserwaage zu schaffen, das als eine Markierungshilfe und als ein Markierungsinstrument geeignet ist. Dabei soll die mit einem solchen Zusatzgerät bestückte Wasserwaage beim Ausrichten vollflächig auf der zugeordneten Wand aufliegen und die für eine Markierung notwendigen Elemente des Zusatzgerätes sollen nur temporär mit der Wand in Wirkverbindung gelangen.

Diese Aufgabe wird gelöst, indem das Zusatzgerät einen Stiftkopf, ein doppelt U-förmiges Mittelteil und ein Befestigungsteil zur Verbindung mit der Wasserwaage aufweist. Der Stiftkopf weist einen quaderförmigen Grundkörper auf, in dessen Längsrichtung eine durchgehende Ausnehmung zur Aufnahme eines Markierungselementes angeordnet ist. In dieser Ausnehmung ist eine Feder derart angeordnet, dass das Markierungselement mit einer Federkraft entgegen der zu markierenden Wand beaufschlagt wird und an der zur Wand entgegengesetzten Stirnseite mit einem Teilabschnitt aus dem mit einem Deckel abgeschlossenen Stiftkopf herausragt. Eine Seitenfläche des Grundkörpers weist einen Längsspalt auf, in dem eine am Markierungselement ausgestaltete oder befestigte Stegkontur derart geführt ist, dass der Weg des Markierungselementes begrenzt ist. An zwei gegenüberliegenden Seitenflächen des Grundkörpers sind viereckige Aussparungen angeordnet, in denen jeweils ein konturgleicher Abschnitt eines Arretierungsbolzens gelagert ist. Der jeweils viereckige Abschnitt jedes Arretierungsbolzens geht in einen zylinderförmigen Abschnitt über. Dieser Abschnitt ist in einer hierzu kongruenten Aussparung an jeweils einem Schenkel am vorderen Endabschnitt der einen gabelförmigen Ausnehmung des doppelt U-förmigen Mittelteils derart gelagert, dass der Stiftkopf am doppelt U-förmigen Mittelteil schwenkbar abgestützt ist. An der anderen gabelförmigen Ausnehmung des doppelt U-förmigen Mittelteils ist das Befestigungsteil längsverschiebbar gelagert. Das Befestigungsteil weist hierfür an seinen beiden in Längsrichtung des doppelt U-förmigen Mittelteils verlaufenden Außenflächen jeweils eine Aussparung auf, in der konturgleiche Flächenabschnitte der gabelförmigen Ausnehmung geführt sind. Das Befestigungsteil weist außerdem eine in Längsrichtung des doppelt U-förmigen Mittelteils verlaufende Bohrung auf, in der ein Schraubbolzen geführt ist, dessen Gewindekontur in eine hierzu kongruente Gewindekontur an einem mittleren Abschnitt neben der einen gabelförmigen Ausnehmung des doppelt U-förmigen Mittelteils eingreift.

Eine vorteilhafte Ausgestaltung ergibt sich, indem die im Stiftkopf in Längsrichtung verlaufende Ausnehmung zylinderförmig ausgestaltet ist zur Aufnahme eines stiftförmigen Markierungselementes mit Kreisquerschnitt.

Eine weitere vorteilhafte Ausgestaltung ergibt sich, indem die in der Ausnehmung des Stiftkopfes angeordnete Feder auf einer Stegkontur unterhalb des Markierungselementes abgestützt ist und eine schräg oder stegartig verlaufende Kontur des Markierungselementes mit einer Federkraft beaufschlagt. Somit wird eine lagestabile Anordnung und eine einfache Bedienbarkeit für das Markierungselement erreicht.

Eine weitere vorteilhafte Ausgestaltung ergibt sich, indem die am Markierungselement als Wegbegrenzung ausgestaltete oder befestigte Stegkontur durch einen am Markierungselement angeordneten Ring und einen im Längsspalt geführten Schieber ausgestaltet ist. Somit wird eine lagefixierte Wegbegrenzung für das Markierungselement erreicht.

Eine weitere vorteilhafte Ausgestaltung ergibt sich, indem in den viereckigen Aussparungen des Stiftkörpers jeweils eine Feder angeordnet ist, welche die zum Stiftkörper ausgerichtete Stirnfläche des Arretierungsbolzens mit einer Federkraft beaufschlagt. Somit wird eine gute Lagefixierung und eine einfache Handhabung bei Lageänderungen des Stiftkopfes erreicht.

Mit den oben erläuterten technischen Merkmalen wird ein Zusatzgerät für eine Wasserwaage geschaffen, das als eine Markierungshilfe und als ein Markierungsinstrument geeignet ist. Der eigentliche Markierungsvorgang wird ähnlich wie beim "Stempeln" realisiert, indem mit zwei beweglichen Stiften funktionell wie mit einem Stempel Markierungen auf einer Wand aufgebracht werden. Dabei kommen diese für eine Markierung notwendigen Elemente nur temporär mit der Wand in Wirkverbindung. Im Vergleich mit dem vorab bekannten Stand der Technik werden somit insbesondere zwei neue Lösungsansätze realisiert, die nachfolgend unter "A" und "B" beschrieben werden:
A) Stift mit drehbaren und arretierbaren Stiftkopf zur Befestigung an Wasserwaagen durch folgenden Aufbau und Funktionsablauf:
   In den Streben des Mittelteils innen und dem schwenkbaren Stiftkopf sind viereckige Aussparungen angeordnet, passend zum viereckigen Unterteil der Arretierungsbolzen. Zusätzlich sind in den Streben des Mitteilteils runde Aussparungen außen angeordnet, passend zum runden Oberteil der Arretierungsbolzen. Die Arretierungsbolzen sind federnd gelagert, so dass diese in gerader und um 90° gedrehter Position in die viereckige Aussparung des Mittelteils gedrückt und gehalten werden. Durch Zusammendrücken der Arretierungsbolzen wird das viereckige Unterteil des Arretierungsbolzens vollständig in die Aussparung des Stiftkopfes gedrückt. Zusätzlich wird die bewegliche Stiftmine nach vorn geschoben. Der Stiftkopf kann somit um 90°gedreht werden, bis die Arretierungsbolzen wieder in der viereckigen Aussparung des Mitteilteils arretieren. An der anderen Seite des Mittelteils befinden sich zwei kleinere Stegkonturen, die als Führung für das Befestigungsteil ausgelegt sind. Das Befestigungsteil ist über eine Schraubverbindung mit dem Schraubbolzen am Mittelteil befestigt. Sofern der Stiftkopf gerade ausgerichtet ist, kann das Markierungselement als üblicher Stift verwendet werden. Sofern der Stiftkopf um 90° gedreht ist, kann das Markierungselement über das Befestigungsteil und den Schraubbolzen an der Wasserwaage befestigt werden.
B) Bewegliche Stiftmine, durch die der Nutzer beim Herunterdrücken mit einem Finger eine Markierung herstellen kann durch folgenden Aufbau und Funktionsablauf:
   Die Stiftmine ist im Stiftkopf beweglich gelagert. Etwa in der Mitte der axialen Erstreckung der Stiftmine befindet sich ein Ring mit einem Schieber, mit dem die Stiftmine im Stiftkopf bewegt werden kann. Durch den Ring wird die Stiftmine so im Stiftkopf gehalten und kann nicht herausfallen. Der Stiftkopf wird oben durch den Deckel geführt und unten durch die runde Aussparung, durch welche lediglich die Stiftmine passt. Zusätzlich befindet sich eine Feder zwischen dem Ring und dem Unterteil. Sofern sich der Stiftkopf in einer um 90° gedrehten Position befindet, wird die Stiftmine durch die Feder soweit zurückgedrückt, dass die Stiftmine in der Kontur des Stiftkopfes verschwindet. Damit wird verhindert, dass beim Ausrichten der Wasserwaage eine herausstehende Stiftmine die Wand oder Decke verunreinigt. Durch Herunterdrücken der Stiftmine mit dem Finger wird die Stiftmine aus dem Stiftkopf geführt und die Markierung kann erzeugt werden. Ein wesentlicher Vorteil ist hierbei, dass der Nutzer die Wasserwaage ständig mit beiden Händen halten kann, da die Markierung mit lediglich einem Finger ausgeführt werden kann. Zusätzlich befindet sich im Mittelteil noch eine runde Aussparung für die Stiftmine. Bei gerade ausgerichtetem Stiftkopf wird die Stiftmine durch die Feder in diese Aussparung gedrückt und gibt noch zusätzlichen Halt.

Aus dem in der Zeichnung dargestellten Ausführungsbeispiel ist der Aufbau eines erfindungsgemäßen Zusatzgerätes ersichtlich, mit dem die oben erläuterten funktionellen Wirkungen erreicht werden können. Es zeigen:

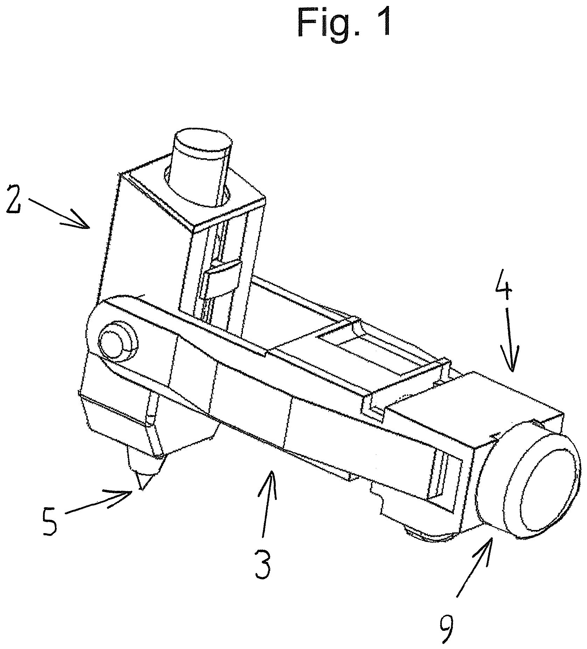

Fig. 1 den grundlegenden Aufbau in perspektivischer Ansicht

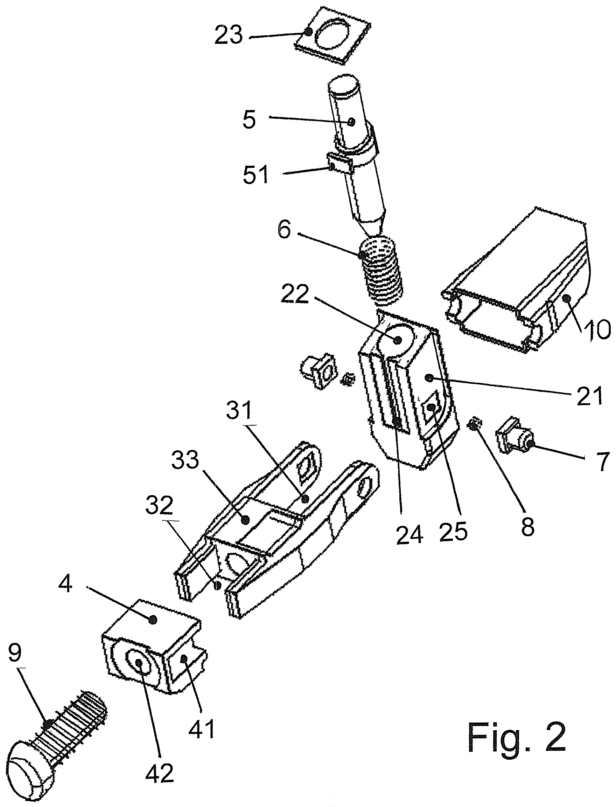

Fig. 2 den grundlegenden Aufbau in Explosionsdarstellung

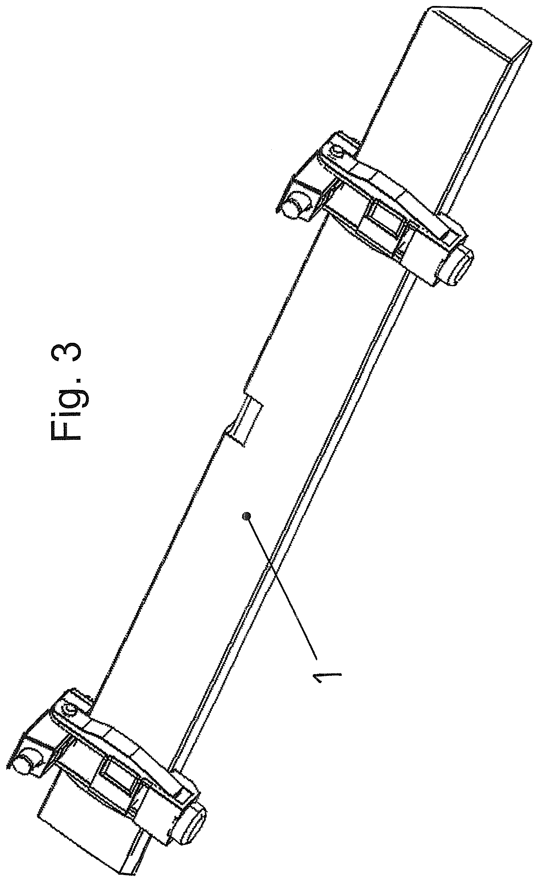

Fig. 3 die Anordnung von zwei Zusatzgeräten auf einer Wasserwaage

Die in der Zeichnung dargestellte Vorrichtung ist vorzugsweise zum Markieren der Position von Bohrlöchern zur Montage von Objekten an einer Wand konzipiert. Hierfür ist die Vorrichtung als ein Zusatzgerät ausgestaltet, das auf einer Wasserwaage 1 lösbar befestigt und entlang der Längsachse dieser Wasserwaage 1 verschiebbar angeordnet ist.

Dieses Zusatzgerät weist einen Stiftkopf 2, ein doppelt U-förmiges Mittelteil 3 und ein Befestigungsteil 4 zur Verbindung mit der Wasserwaage 1 auf. Der Stiftkopf 2 hat einen quaderförmigen Grundkörper 21, in dessen Längsrichtung eine durchgehende Ausnehmung 22 zur Aufnahme eines Markierungselementes 5 angeordnet ist. Bei der in der Zeichnung dargestellten Ausführung ist die Ausnehmung 22 zylinderförmig ausgestaltet, so dass hier ein stiftförmiges Markierungselement 5 mit Kreisquerschnitt eingesetzt werden kann.

In der Ausnehmung 22 ist eine Feder 6 derart angeordnet, dass das Markierungselement 5 mit einer Federkraft entgegen der zu markierenden Wand (nicht dargestellt) beaufschlagt wird. Hierfür ist die Feder 6 beispielsweise mit einem Endabschnitt auf einer Stegkontur unterhalb vom Markierungselement 5 abgestützt und beaufschlagt eine schräg oder stegartig verlaufende Kontur des Markierungselementes 5 mit einer Federkraft. An der zur Wand entgegengesetzten Stirnseite ragt das Markierungselement 5 mit einem Teilabschnitt aus dem mit einem Deckel 23 abgeschlossenen Stiftkopf 2 heraus.

Eine Seitenfläche des Grundkörpers 21 weist einen Längsspalt 24 auf, in dem eine am Markierungselement 5 ausgestaltete oder befestigte Stegkontur 51 derart geführt ist, dass der Weg des Markierungselementes 5 begrenzt ist. Die Stegkontur 51 kann verschiedenartig ausgestaltet werden, z.B. durch einen am Markierungselement 5 angeordneten Ring mit einem im Längsspalt 24 geführten Schieber. Der Längsspalt 24 ist vorzugsweise an der Seitenfläche des Grundkörpers 21 ausgestaltet, die zum Innenraum der einen gabelförmigen Ausnehmung 31 des doppelt U-förmigen Mittelteils 3 ausgerichtet ist. Somit erfolgt die Bewegung der Stegkontur 51 zur Wegbegrenzung des Markierungselementes 5 in einem freien Bauraum, ohne die Gefahr einer Kollision mit anderen Bauteilen.

An zwei gegenüberliegenden Seitenflächen des Grundkörpers 21 sind viereckige Aussparungen 25 angeordnet, in denen jeweils ein konturgleicher Abschnitt eines Arretierungsbolzens 7 gelagert ist. Der viereckige Abschnitt jedes Arretierungsbolzens 7 geht in einen zylinderförmigen Abschnitt über. Diese zylinderförmigen Abschnitte sind in einer hierzu kongruenten Aussparung an jeweils einem Schenkel am vorderen Endabschnitt der einen gabelförmigen Ausnehmung 31 des doppelt U-förmigen Mittelteils 3 derart gelagert, dass der Stiftkopf 2 am doppelt U-förmigen Mittelteil 3 schwenkbar abgestützt ist. In den viereckigen Aussparungen 25 des Stiftkörpers 2 ist jeweils eine Feder 8 angeordnet, welche die zum Stiftkörper 2 ausgerichtete Stirnfläche des Arretierungsbolzens 7 mit einer Federkraft beaufschlagt.

An der anderen gabelförmigen Ausnehmung 32 des doppelt U-förmigen Mittelteils 3 ist das Befestigungsteil 4 längsverschiebbar gelagert. Dabei weist das Befestigungsteil 4 an seinen beiden in Längsrichtung des doppelt U-förmigen Mittelteils 3 verlaufenden Außenflächen jeweils eine Aussparung 41 auf, in der konturgleiche Flächenabschnitte der gabelförmigen Ausnehmung 32 geführt sind.

Weiterhin weist das Befestigungsteil 4 eine in Längsrichtung des doppelt U-förmigen Mittelteils 3 verlaufende Bohrung 42 auf, in der ein Schraubbolzen 9 geführt ist. Die Gewindekontur des Schraubbolzens 9 greift in eine hierzu kongruente Gewindekontur an einem mittleren Abschnitt 33 neben der gabelförmigen Ausnehmung 32 des doppelt U-förmigen Mittelteils 3 ein.

Sofern ein entsprechend aufgebautes Zusatzgerät beispielsweise beim Aufhängen eines Regales mit zwei Schrauben an einer Wand verwendet werden soll, wird beispielsweise die Regalmitte erfasst. Ausgehend von der Regalmitte werden symmetrisch zu diesem Punkt auf dem Grundkörper der Wasserwaage 1 zwei Zusatzgeräte befestigt, so dass funktionell eine Schablone erzeugt wird. Dieser Arbeitsschritt wird nicht an der Wand durchgeführt, sondern vorzugsweise auf einer festen Unterlage, so dass eine sehr exakte Festlegung des gewünschten Abstandes der späteren Bohrlöcher möglich ist. Danach wird die mit zwei Zusatzgeräten bestückte Wasserwaage 1 an die Wand angehalten und unter Beobachtung der Libelle ausgerichtet. Nachfolgend erfolgt die Markierung der Bohrlöcher durch Herunterdrücken der Markierungselemente 5 mit einem Finger in jedem Zusatzgerät.

### Bezugszeichenliste

1 Wasserwaage
2 Stiftkopf
21 quaderförmiger Grundkörper
22 durchgehende Ausnehmung
23 Deckel am Stiftkopf
24 Längsspalt
25 viereckige Aussparung
3 Mittelteil, doppelt U-förmig
31 gabelförmige Ausnehmung
32 gabelförmige Ausnehmung
33 mittlerer Abschnitt
4 Befestigungsteil
41 Aussparung
42 Bohrung
5 Markierungselement
51 Stegkontur / Wegbegrenzung
6 Feder im Stiftkopf
7 Arretierungsbolzen
8 Feder für Arretierungsbolzen
9 Schraubbolzen
10 Deckel

## Patentansprüche

1. Zusatzgerät für eine Wasserwaage, ausgestaltet als Markierungshilfe zum Anzeigen und als Markierungsinstrument zum Markieren der Position von Bohrlöchern zur Montage von Objekten an einer Wand, wobei das Zusatzgerät auf einer Wasserwaage lösbar befestigt und entlang der Längsachse dieser Wasserwaage verschiebbar angeordnet ist, wobei das Zusatzgerät einen Stiftkopf (2), ein doppelt U-förmiges Mittelteil (3) und ein Befestigungsteil (4) zur Verbindung mit der Wasserwaage (1) aufweist, wobei der Stiftkopf (2) einen quaderförmigen Grundkörper (21) aufweist, in dessen Längsrichtung eine durchgehende Ausnehmung (22) zur Aufnahme eines Markierungselementes (5) angeordnet ist, wobei in der Ausnehmung (22) eine Feder (6) derart angeordnet ist, dass das Markierungselement (5) mit einer Federkraft entgegen der zu markierenden Wand beaufschlagt wird und an der zur Wand entgegengesetzten Stirnseite mit einem Teilabschnitt aus dem mit einem Deckel (23) abgeschlossenen Stiftkopf (2) herausragt, wobei eine Seitenfläche des Grundkörpers (21) einen Längsspalt (24) aufweist, in dem eine am Markierungselement (5) ausgestaltete oder befestigte Stegkontur (51) derart geführt ist, dass der Weg des Markierungselementes (5) begrenzt ist, wobei an zwei gegenüberliegenden Seitenflächen des Grundkörpers (21) viereckige Aussparungen (25) angeordnet sind, in denen jeweils ein konturgleicher Abschnitt eines Arretierungsbolzens (7) gelagert ist, wobei der jeweils viereckige Abschnitt jedes Arretierungsbolzens (7) in einen zylinderförmigen Abschnitt übergeht, der in einer hierzu kongruenten Aussparung an jeweils einem Schenkel am vorderen Endabschnitt der einen gabelförmigen Ausnehmung (31) des doppelt U-förmigen Mittelteils (3) derart gelagert ist, dass der Stiftkopf (2) am doppelt U-förmigen Mittelteil (3) schwenkbar abgestützt ist, wobei an der anderen gabelförmigen Ausnehmung (32) des doppelt U-förmigen Mittelteils (3) das Befestigungsteil (4) längsverschiebbar gelagert ist, wobei das Befestigungsteil (4) an seinen beiden in Längsrichtung des doppelt U-förmigen Mittelteils (3) verlaufenden Außenflächen jeweils eine Aussparung (41) aufweist, in der konturgleiche Flächenabschnitte der gabelförmigen Ausnehmung (32) geführt sind und wobei das Befestigungsteil (4) eine in Längsrichtung des doppelt U-förmigen Mittelteils (3) verlaufende Bohrung (42) aufweist, in der ein Schraubbolzen (9) geführt ist, dessen Gewindekontur in eine hierzu kongruente Gewindekontur an einem mittleren Abschnitt (33) neben der gabelförmigen Ausnehmung (32) des doppelt U-förmigen Mittelteils (3) eingreift.

2. Zusatzgerät für eine Wasserwaage nach Anspruch 1, **dadurch gekennzeichnet, dass** die im Stiftkopf (2) in Längsrichtung verlaufende Ausnehmung (22) zylinderförmig ausgestaltet ist zur Aufnahme eines stiftförmigen Markierungselementes (5) mit Kreisquerschnitt.

3. Zusatzgerät für eine Wasserwaage nach Anspruch 1, **dadurch gekennzeichnet, dass** die in der Ausnehmung (22) des Stiftkopfes (2) angeordnete Feder (6) auf einer Stegkontur unterhalb des Markierungselementes (5) abgestützt ist und eine schräg oder stegartig verlaufende Kontur des Markierungselementes (5) mit einer Federkraft beaufschlagt.

4. Zusatzgerät für eine Wasserwaage nach Anspruch 1, **dadurch gekennzeichnet, dass** die am Markierungselement (5) als Wegbegrenzung ausgestaltete oder befestigte Stegkontur (51) durch einen am Markierungselement (5) angeordneten Ring und einen im Längsspalt (24) des Grundkörpers (21) vom Stiftkopf (2) geführten Schieber ausgestaltet ist.

5. Zusatzgerät für eine Wasserwaage nach Anspruch 1, **dadurch gekennzeichnet, dass** in den viereckigen Aussparungen (25) des Stiftkopfes (2) jeweils eine Feder (8) angeordnet ist, welche die zum Stiftkörper (2) ausgerichtete Stirnfläche des Arretierungsbolzens (7) mit einer Federkraft beaufschlagt.

## Claims

1. An add-on for a spirit level, designed as a marking aid for indicating and as a marking instrument for marking the position of drill holes for mounting objects on a wall, wherein the add-on is releasably mounted on a spirit level and is arranged to be movable along the longitudinal axis of said spirit level, wherein the add-on has a pin head (2), a double U-shaped central part (3), and a fastening part (4) for connection to the spirit level (1), wherein the pin head (2) has a rectangular base body (21), in the longitudinal direction of which a continuous recess (22) for receiving a marking element (5) is arranged, wherein a spring (6) is arranged in the recess (22) such that a spring force is applied to the marking element (5) against the wall to be marked and a partial section thereof projects from the pin head (2), which is closed by a cover (23), at the end opposite the wall, wherein one side surface of the base body (21) has a longitudinal gap (24) in which a web contour (51) formed or attached to the marking element (5) is guided, such that the path of the marking element (5) is limited, wherein square recesses (25) are arranged on two opposite side surfaces of the base body (21), in each of which a contour-equal section of a locking pin (7) is mounted, wherein the respective square section of each locking pin (7) merges into a cylindrical section which is mounted in a recess congruent thereto on a respective limb front end section of the one fork-shaped recess (31) of the double U-shaped central part (3), such that the pin head (2) is pivotably supported on the double U-shaped central part (3), wherein the fastening part (4) is longitudinally movably mounted on the other fork-shaped recess (32) of the double U-shaped central part (3), wherein the fastening part (4) has a recess (41) on each of its two outer surfaces extending in the longitudinal direction of the double U-shaped central part (3) in which recess (41) contour-like surface sections of the fork-shaped recess (32) are guided, and wherein the fastening part (4) has a bore (42) extending in the longitudinal direction of the double U-shaped central part (3) in which a screw bolt (9) is guided, the thread contour of which engages in a thread contour congruent thereto on a central section (33) next to the fork-shaped recess (32) of the double U-shaped central part (3).

2. The add-on for a spirit level according to claim 1, **characterized in that** the recess (22) extending in the pin head (2) in the longitudinal direction is cylindrical in shape for receiving a pin-shaped marking element (5) having a circular cross-section.

3. The add-on for a spirit level according to claim 1, **characterized in that** the spring (6) arranged in the recess (22) of the pin head (2) is supported on a web contour below the marking element (5) and applies a spring force to an oblique or web-like contour of the marking element (5).

4. The add-on for a spirit level according to claim 1, **characterized in that** the web contour (51) designed or attached to the marking element (5) as a path limitation is formed by a ring arranged on the marking element (5) and a slider guided by the pin head (2) in the longitudinal gap (24) of the base body (21).

5. The add-on for a spirit level according to claim 1, **characterized in that** a spring (8) is arranged in each of the square recesses (25) of the pin head (2), which spring applies a spring force to the end face of the locking pin (7) aligned with the pin body (2).

## Revendications

1. Accessoire pour un niveau à bulle, conçu comme aide au marquage pour le repérage et comme instrument de marquage pour marquer la position de trous percés pour la fixation d'objets sur un mur, l'accessoire étant fixé de manière amovible sur un niveau à bulle et étant disposé de manière à pouvoir être déplacé le long de l'axe longitudinal dudit niveau à bulle. L'accessoire présentant une tête à broche (2), une partie centrale (3) en forme de double U et une partie fixation (4) permettant le raccordement au niveau à bulle (1), la tête à broche (2) présentant un corps de base parallélépipédique (21) dans la direction longitudinale duquel est disposé un évidement traversant (22) destiné à recevoir un élément de marquage (5), un ressort (6) étant disposé dans l'évidement (22) de telle sorte que l'élément de marquage (5) soit actionné par une force de ressort en direction de la paroi à marquer et fasse saillie par une section partielle hors de la tête à broche (2) fermée par un couvercle (23) du côté frontal opposé à la paroi, une surface latérale du corps de base (21) présentant un espace longitudinal (24) dans lequel un contour de bande (51) conçu ou fixé sur l'élément de marquage (5) est guidé de telle sorte que la course de l'élément de marquage (5) est limitée, des évidements carrés (25) étant disposés sur deux surfaces latérales opposées du corps de base (21), dans lesquels sont logées respectivement une section de même contour d'un boulon d'arrêt (7), la section carrée respective de chaque boulon d'arrêt (7) se transformant en une section cylindrique logée dans un évidement congruent à celui-ci sur une branche respective de la section d'extrémité avant de l'un des évidements (31) en forme de fourche de la partie centrale (3) en forme de double U, de telle sorte, que la tête à broche (2) s'appuie de manière pivotante sur la partie centrale (3) en forme de double U, la pièce de fixation (4) étant montée de manière à pouvoir coulisser longitudinalement sur l'autre évidement (32) en forme de fourche de la partie centrale (3) en forme de double U, la pièce de fixation (4) présentant sur chacune de ses deux surfaces extérieures s'étendant dans la direction longitudinale de la partie centrale (3) en forme de double U un évidement (41) dans lequel sont guidées des sections de surface de même contour de l'évidement (32) en forme de fourche, et la pièce de fixation (4) présentant un alésage (42) s'étendant dans la direction longitudinale de la partie centrale (3) en forme de double U, dans lequel est guidé un boulon fileté (9) dont le contour fileté s'engage dans un contour fileté congruent à celui-ci sur une section centrale (33) à côté de l'évidement en forme de fourche (32) de la partie centrale en forme de double U (3).

2. Accessoire pour un niveau à bulle selon la revendication 1, **caractérisé en ce que** l'évidement (22) s'étendant dans la direction longitudinale de la tête à broche (2) est conçu en forme de cylindre pour recevoir un élément de marquage (5) en forme de broche ayant une section transversale circulaire.

3. Accessoire pour un niveau à bulle selon la revendication 1, **caractérisé en ce que** le ressort (6) disposé dans l'évidement (22) de la tête à broche (2) s'appuie sur un contour de bande en dessous de l'élément de marquage (5) et sur un contour oblique ou en forme de bande de l'élément de marquage (5) sous l'effet d'une force de ressort.

4. Accessoire pour un niveau à bulle selon la revendication 1, **caractérisé en ce que** le contour de bande (51) conçu ou fixé sur l'élément de marquage (5) en tant que limitation de la course est formé par un anneau disposé sur l'élément de marquage (5) et un anneau dans l'espace longitudinal (24) du corps de base (21) dans lequel est conçu le coulissement guidé de la tête à broche (2).

5. Accessoire pour un niveau à bulle selon la revendication 1, **caractérisé par le fait qu'**un ressort (8) est disposé dans chacun des évidements carrés (25) de la tête à broche (2), ce qui permet de maintenir la face d'extrémité du boulon de verrouillage (7) alignée avec le corps de la broche (2) sous l'effet d'une force de ressort
